# EUROPÄISCHE PATENTANMELDUNG

(11) **EP 4 137 242 A1**
(43) Veröffentlichungstag der Anmeldung: **22.02.2023**
(21) Anmeldenummer: 22190834.6
(22) Anmeldetag: 17.08.2022
(51) Int. Cl.: B21D 5/01, B21D 17/02, B21D 53/88, B60R 21/055, B23P 15/00, B60N 2/818, B21D 35/00

(54) **VERFAHREN ZUM HERSTELLEN EINES ROHRFÖRMIGEN KÖRPERS, INSBESONDERE EINER HALTESTANGE, UND EINE NACH EINEM SOLCHEN VERFAHREN HERGESTELLTE HALTESTANGE**

(30) Priorität: 18.08.2021 DE 102021121427
(71) Anmelder: Wasserthal, Yevheniya, 64750 Lützelbach (DE)
(72) Erfinder:
(74) Vertreter: Flügel Preissner Schober Seidel

(57) **Zusammenfassung**

Verfahren zum Herstellen eines rohrförmigen Körpers (10), der als Haltestange (200) zum Tragen einer Kopfstütze (210) eines Fahrzeugsitzes (220) geeignet ist, wobei der rohrförmige Körper (10) eine mit wenigstens einer Vertiefung (30) versehene Mantelfläche (11) aufweist und insbesondere für ein Fahrzeug (1) verwendet wird, gekennzeichnet durch folgende Verfahrensschritte: a) Bereitstellen von wenigstens einem plattenförmigen Halbzeug (20); b) Umformen des Halbzeugs (20) zu einem Rohling (21); c) Einbringen von wenigstens einer Vertiefung (30) in den Rohling (21) während oder nach Schritt b); d1) Erzeugen eines ersten schalenförmigen Segments (40), das zwei Ränder (41, 42) hat, aus dem Rohling (21) nach Schritt c); e1) Erzeugen eines zweiten schalenförmigen Segments (50), das zwei Ränder (51, 52) hat, aus dem Rohling (21) nach Schritt b) oder c); f1) Fügen des ersten Segments (40) und des zweiten Segments (50) nach Schritt e1) zur Bildung des rohrförmigen Körpers (10). Ferner betrifft die Erfindung eine Haltestange zum Tragen einer Kopfstütze eines Fahrzeugsitzes sowie eine Kopfstützte, einen Fahrzeugsitz und ein Fahrzeug mit einer derartigen Haltestange.

## Beschreibung

Die Erfindung betrifft ein Verfahren zum Herstellen eines rohrförmigen Körpers, der als Haltestange zum Tragen einer Kopfstütze eines Fahrzeugsitzes geeignet ist, und eine mit wenigstens einer Vertiefung versehene Mantelfläche aufweist.

Haltestangen für Kopfstützen sind sicherheitsrelevante Bauteile. Beispielsweise bei einem Heckaufprall mit einem Fahrzeug treten über einen kurzen Zeitraum hohe Beschleunigungen auf. Die dabei auftretenden Kräfte werden über die Karosserie des Fahrzeugs und den Verankerungspunkten des Fahrzeugsitzes auf die Sitzstruktur und auf die Sitzlehne übertragen. Dabei ist eine verzögerte Bewegung der Kopfstütze relativ zu den Verankerungspunkten des Sitzes aufgrund der Trägheit der einzelnen Bauteile zu beobachten. Während dieser verzögerten Bewegung treten zugleich eine Deformation und eine Verwindung der Sitzstruktur einschließlich der Lehnenstruktur auf. In Folge dieser Verwindung, insbesondere im oberen Bereich der Lehnenstruktur, ist es möglich, dass der Verriegelungsdraht der Führungshülse, welcher zur Arretierung der Haltestangen der Kopfstütze dient, sich aus der Kerbe der Haltestange windet. Infolge der noch weiterhin wirkenden Beschleunigungen auf die einzelnen Bauteile kann die Kopfstütze aus der zuvor eingestellten Position rutschen oder sogar sich vom Fahrzeugsitz separieren. Dies führt zu einem erheblichen Sicherheitsrisiko, da der Kopf dann nicht mehr von der Kopfstütze aufgefangen werden kann.

Dies könnte verhindert werden, indem die Sitzstruktur versteift wird, sodass diese sich nicht zu sehr verwinden kann. Durch zusätzliche Versteifungen wird allerdings das Gewicht des Fahrzeugsitzes meist deutlich erhöht. Alternative ist es bekannt, bei Haltestangen für eine Kopfstütze die vorhandenen Kerben mit einem Hinterschnitt auszugestalten. Hierzu ist beispielsweise aus DE 10 2017 116 163 A1 bekannt, speziell ausgeprägte Rastierungsabschnitte im Kopfstützenträger vorzusehen. Die Rastierungsabschnitte werden hierbei jedoch in den Kopfstützenträger geschnitten und weisen dadurch eine Öffnung auf.

Eine Öffnung oder ein Riss in einem Rohr wirkt bekanntermaßen als Spannungskonzentration und kann beim Auftreten von hohen Kräften, wie es regelmäßig bei einem Unfall der Fall ist, zu einem Bruch der Haltestange führen.

Um eine Öffnung zu vermeiden, wird die Kerbe direkt in die Haltestange eingepresst. Beispielsweise ist hierzu in EP 2 017 121 A1 ein Kopfstützentragelement beschrieben, das aus flexibel gewalztem Bandmaterial hergestellt wird. Das gewalzte Bandmaterial wird zuerst in Längsrichtung zu einem Rohrkörper verschweißt. Anschließend werden in den Rohrkörper die Kerben eingepresst. Die Kerbtiefe durch Einpressen in ein Rohr ist allerdings insbesondere durch den möglichen Materialnachfluss während des Einpressvorgangs in das Rohr limitiert.

Aus DE 11 2019 005 271 T5 ist ferner ein Verfahren zur Herstellung eines Dämpfers bestehend aus zwei Schalen bekannt. Das Verfahren sieht zwei Metallrohlinge vor, die zu Schalen umgeformt werden. Bei dem Umformvorgang können Vorsprünge in die Schalen eingebracht werden. Anschließend werden diese Schalen mittels eines Laserschweißverfahrens miteinander verbunden. Ein Dämpfer unterscheidet sich jedoch zu einer Haltestange eines Fahrzeugsitzes indem die Haltestange deutlich höhere Sicherheitsanforderungen erfüllen muss. Entsprechend bestehen erhöhte Anforderungen an die Ausprägung der Vertiefung und der gleichmäßigen Dicke der Vertiefung von Haltestangen für Kopfstützen.

Aus DE 10 2006 025 522 A1 ist ein weiteres allgemeines Verfahren zur Herstellung strukturierter, geschlossener Hohlprofilen bekannt. Das Verfahren sieht eine Platine vor, die tiefgezogen und anschließend in ein Formdruckgesenk eingelegt wird. In dem Formdruckgesenk wird die Platine in die endgültige Form gebracht. Anschließend wird die Verbindungsbereich gefügt, sodass ein rohrförmiger Körper gebildet wird.

Aufgabe der Erfindung ist es ein Verfahren zur Herstellung, eine Haltestange sowie eine Kopfstütze, einen Fahrzeugsitz und ein Fahrzeug mit einer derartigen Haltestange zu schaffen, welche eine gesteigerte Fahrzeugsicherheit ermöglichen.

Die Aufgabe der Erfindung wird gelöst mittels eines Verfahrens nach Anspruch 1 oder 2, einer Haltestange nach Anspruch 10, einer Kopfstütze nach Anspruch 11, einem Fahrzeugsitz nach Anspruch 12 und einem Fahrzeug nach Anspruch 15.

Vorteilhafte Ausgestaltungen sind Gegenstand der jeweils abhängigen Ansprüche.

Erfindungsgemäß weist das Verfahren zum Herstellen eines rohrförmigen Körpers, der als Haltestange zum Tragen einer Kopfstütze eines Fahrzeugsitzes ausgestaltet ist, eine mit wenigstens einer Vertiefung versehene Mantelfläche auf. Das Verfahren zeichnet sich durch die folgenden Verfahrensschritte aus: a) Bereitstellen von wenigstens einem plattenförmigen Halbzeug, das eine vorgegebene Dicke hat. b) Umformen des Halbzeugs zu einem eine konvexe Form aufweisenden Rohling, der eine Außenfläche und eine der Außenfläche abgewandte Innenfläche hat. c) Einbringen von wenigstens einer Vertiefung, die eine vorgegebene Breite und Tiefe hat, in die Außenfläche des Rohlings mittels einer Kaltumformung während oder nach Schritt b). d1) Erzeugen von wenigstens einem ersten schalenförmigen Segment, das sich in einer Längsrichtung erstreckt und in der Längsrichtung zwei Ränder hat, aus dem Rohling nach Schritt c). Unter Erzeugen ist ein weiteres Umformen, etwa Biegen, beinhaltet oder auch das Bereitstellen des Rohlings nach Schritt c) oder b). e1) Erzeugen von wenigstens einem zweiten schalenförmigen Segment, das sich in einer Längsrichtung erstreckt und in der Längsrichtung zwei Ränder hat, aus dem Rohling nach Schritt b) oder c). f1) Fügen des ersten Segments und des zweiten Segments nach Schritt e1) zur Bildung des rohrförmigen Körpers, indem die Ränder des ersten Segments und des zweiten Segments entlang von wenigstens zwei Nahtstellen miteinander verbunden werden.

Alternativ sind folgende Verfahrensschritte zur Herstellung des erfindungsgemäßen rohrförmigen Körpers vorgesehen, wobei die Bezeichnungen mit demselben Buchstaben vergleichbare Verfahrensschritte beschreiben: a) Bereitstellen von wenigstens einem plattenförmigen Halbzeug, das eine vorgegebene Dicke hat. b) Umformen des Halbzeugs zu einem eine konvexe Form aufweisenden Rohling, der eine Außenfläche und eine der Außenfläche abgewandte Innenfläche hat. c) Einbringen von wenigstens einer Vertiefung, die eine vorgegebene Breite und Tiefe hat, in die Außenfläche des Rohlings mittels einer Kaltumformung während oder nach Schritt b). d2) Biegen des Rohlings zu einem rohrförmigen Segment, das sich in einer Längsrichtung erstreckt und in der Längsrichtung zwei einander gegenüberliegende Ränder hat, nach Schritt c). e2) Verbinden der Ränder entlang einer Nahtstelle nach Schritt d2) zur Bildung des rohrförmigen Körpers.

Die erfindungsgemäßen Verfahren zeichnen sich in besonders vorteilhafter Weise dadurch aus, dass die Innenfläche des Rohlings eine offene Kontur aufweist, sodass zur Einbringung der Vertiefung mittels Kaltumformung insbesondere eine Gegenmatrize oder ein Untergesenk verwendet werden kann. Bei einer geschlossenen Kontur, wie es bei Rohren der Fall ist, kann zur Einbringung einer Vertiefung keine Gegenmatrize verwendet werden, da diese anschließend nicht mehr aus dem Rohr aufgrund der eingebrachten Vertiefung entnommen werden kann.

Weiter vorteilhaft ist es, dass während des Kaltumformprozesses mittels einem Untergesenk und einem Obergesenk die Dicke des Halbzeugs oder Rohling zusätzlich reduziert werden kann. Beispielsweise kann in einem Bereich um die einzubringende Vertiefung herum die Dicke reduziert werden, wodurch ein ausreichender Materialfluss während des Einbringens oder Tiefziehens der Vertiefung sichergestellt wird. Ferner wird es ermöglicht, im Wesentlichen eine gleichmäßige Dicke des Materials im Bereich der gesamten Vertiefung zu ermöglichen. Dies gewährleistet in vorteilhafter Weise, dass keine Risse beim Einbringen der Vertiefung entstehen.

Zur weiteren Einsparung an Gewicht ist es vorteilhaft, als Halbzeug sogenannte Tailored Blanks zu verwenden. Unter Tailored Blanks ist eine Blechplatine zu verstehen, welche typischerweise verschiedenen Blechdicken aufweist. Vorliegend ist es vorteilhaft, wenn insbesondere der Bereich eine erhöhte Dicke aufweist, in welchem die Vertiefung eingebracht wird.

Ferner können die Vertiefungen mittels des Kaltumformprozesses tiefer ausgestaltet werden, insbesondere aufgrund der Verwendung einer Gegenmatrize oder des Untergesenks in Verbindung mit einem Obergesenk. Des Weiteren kann insbesondere der Übergangsbereich der Vertiefung mit einem deutlich geringeren Radius vorgesehen werden, wodurch eine Kante mit einem kleinen Radius hergestellt werden kann.

Ferner ist es denkbar eine Vielzahl an Segmenten zur Herstellung des rohrförmigen Körpers vorzusehen. Hierzu kann die Vertiefung in nur einen Rohling oder in mehrere Rohlinge eingebracht werden. Es wäre auch denkbar einen Teil der Vertiefung in einen Rohling einzubringen und den anderen Teil der Vertiefung in einen weiteren Rohling, sodass beim Fügen der Segmente diese Teile der Vertiefungen wieder eine Vertiefung bilden.

Unter plattenförmiges Halbzeug ist ein im Wesentlichen flaches Halbzeug zu verstehen, das in einer vorteilhaften Ausgestaltung auch eine konkave Form aufweisen kann. Unter Fahrzeug ist beispielsweise ein zweispuriges Kraftfahrzeug, ein Flugzeug, ein Schiff oder ein anderes Personenbeförderungsmittel zu verstehen.

Vorteilhaft wird der rohrförmige Körper als Haltestange zum Tragen einer Kopfstütze eines Fahrzeugsitzes verwendet.

In einem bevorzugten Verfahrensschritt werden das Halbzeug, der Rohling oder das Segment entlang der Längsrichtung vor dem Verbinden der Ränder beschnitten. Dabei kann mittels Laser entlang einer Schnittkante eine gerade Stoßfläche gebildet werden, sodass die Ränder des ersten Segments flächig auf den Rändern des zweiten Segments aufliegen. Der Beschnitt kann bereits an dem Halbzeug erfolgen, wobei die Schnittkante derart angewinkelt ist, sodass das Halbzeug im Querschnitt ein symmetrisches Trapez aufweist. Alternativ kann auch nach dem Umformen des Halbzeugs zu einem Rohling ein Überstand abgeschnitten werden, sodass am Ende des Herstellungsverfahrens die Ränder der Segmente flächig zueinander aufliegen.

Es ist besonders bevorzugt, das rohrförmige Segment, insbesondere vor Schritt f1) oder e2), zu beschneiden. Dies weist den Vorteil auf, dass die Ränder der Segmente eine definierte Fläche bilden, wodurch die Nahtstellt zum Verbinden der Ränder einen sogenannten "0-Spalt" aufweisen. Unter "0-Spalt" ist zu verstehen, dass die Ränder plan aufeinander aufliegen können. Hierdurch wird es ermöglicht, dass bei dem nachfolgenden Fügen, beispielsweise mittels Laserschweißen, eine verbesserte Nahtausbildung gewährleistet werden kann.

In einer vorteilhaften Ausgestaltung hierzu wird der Rand des ersten schalenförmigen Segments in einem definierten Winkel beschnitten und der Rand des zweiten Segments in einem gespiegelten Winkel beschnitten, sodass die Ränder beim Fügen der Segmente plan aufeinander aufliegen.

In einer weiteren vorteilhaften Ausgestaltung wird zumindest einer der Ränder des ersten Segments mit einer ersten Kanteneinprägung und zumindest einer der Ränder des zweiten Segments mit einer zweiten Kanteneinprägung versehen. Die erste Kanteneinprägung und die zweite Kanteneinprägung sind hierbei ausgestaltet, ineinander einzugreifen. Vorzugweise wird hierdurch eine formschlüssig Verbindung gebildet. Dies weist den Vorteil auf, dass die Segmente leichter relativ zueinander positioniert werden können. Die Segmente können somit ineinander einrasten, wobei ein planer Übergang der Mantelfläche im Bereich der Nahtstellt sichergestellt wird. Ein verrutschen der Segmente relativ zueinander kurz vor oder während dem Fügen wird ebenfalls verhindert.

Unter Kanteneinprägung ist beispielsweise eine stufenförmige Prägung zu verstehen. Eine stufenförmige Prägung umfasst einen Vorsprung, der von dem Rand des ersten Segments hervorsteht und in einen korrespondierenden Rücksprung in den Rand des zweiten Segments eingreift. Alternativ zu einer stufenförmigen Prägung sind auch andere Formen denkbar, welche eine formschlüssige Verbindung ermöglichen. Beispielsweise ist es denkbar, dass der Vorsprung eine konvexe halbrunde Form und der korrespondierende Rücksprung eine entsprechend angepasste konkave halbrunde Form aufweist.

Die Kanteneinprägung kann in einem separaten Schritt mittels eines Stempels in den Rohling, das Halbzeug oder das Segment eingebracht werden. Es ist jedoch bevorzugt, dass die Kanteneinprägung mit dem Einbringen der Vertiefung in den Rohling eingebracht wird.

Es ist weiter bevorzugt, dass die Schritte Umformen des Halbzeugs und/oder Einbringen der Vertiefungen und/oder Biegen des Rohlings und/oder Einbringen der Kanteneinprägung mittels eines Folgeverbundwerkzeuges erfolgt.

Vorteilhaft weist die Vertiefung eine erste Seitenfläche, eine zweite Seitenfläche, die der ersten Seitenfläche gegenüber liegt, und eine Bodenfläche auf. Die Bodenfläche der Vertiefung kann in einer bevorzugten Ausgestaltung im Querschnitt eine Dachform aufweisen. Eine derartige Form kann während dem Einbringen der Vertiefung mittels eines entsprechend geformten Stempels des Obergesenks eingebracht werden. Alternativ kann eine derartige Form durch das Erzeugen eines schalenförmigen Segments oder durch Biegen des Rohlings jeweils nach Schritt c) hergestellt werden. Die dachförmige Ausgestaltung weist den Vorteil auf, dass der Verriegelungsdraht bei einem Verwinden der Sitzstruktur tiefer in der Vertiefung positioniert werden kann, da sich die Vertiefung um einen größeren Bereich des Umfangs des Rohrs erstrecken kann. Folglich kann sich der rohrförmige Körper in Verwendung als Haltestange schwerer aus der verriegelten Position lösen.

In einer vorteilhaften Ausgestaltung ist die Vertiefung als Kerbe ausgestaltet, bei welcher die Bodenfläche den Kerbgrund bildet und sich die erste Seitenfläche unter einem vorgegebenen Winkel zu der zweiten Seitenfläche erstreckt.

In einer weiteren vorteilhaften Ausgestaltung umfasst der rohrförmige Körper einen ersten gekrümmten Übergangsbereich zwischen der Seitenfläche und der Mantelfläche, der einen vorgegebenen Krümmungsradius der kleiner als 3 mm, vorzugsweise kleiner als 2 mm, vorzugsweise kleiner als 1 mm, vorzugsweise kleiner als 0,75 mm, vorzugsweise kleiner als 0,5 mm, vorzugsweise kleiner als 0,4 mm, am bevorzugtesten kleiner als 0,3 mm ist. Üblicherweise weist der Verriegelungsdraht einen Durchmesser von rund 1,7 mm auf. Damit sichergestellt werden kann, dass der Verriegelungsdraht in der Vertiefung sicher festsitzt, darf der erste Übergangsbereich nicht über die Hälfte des Durchmessers des Verriegelungsdrahts ragen. Daher wird unter Berücksichtigung einer Toleranz ein Krümmungsradius von unter 0,4 mm vorgeschlagen, wobei sich in der Praxis als besonders relevant herausgestellt hat, dass eines Radius von unter 0,4 mm und insbesondere von unter 0,3 mm eine besonders sichere Verriegelung bietet. Ferner wird dabei sichergestellt, dass der Verriegelungsdraht nicht mit dem ersten Übergangsbereich in Kontakt kommt und im verriegelten Zustand im Wesentlichen nur mit der Seitenfläche in Kontakt kommen kann. Nachdem jedoch auch Verriegelungsdrähte mit einem Durchmesser von bis zu 6 mm denkbar sind, wird vorliegend auch ein entsprechend großer Übergangsbereich mit einem Radius, der kleiner als 3 mm ist, vorgeschlagen.

In einer weiteren vorteilhaften Ausgestaltung umfasst der rohrförmige Körper einen zweiten gekrümmten Übergangsbereich zwischen der Seitenfläche und der Bodenfläche, der einen vorgegebenen zweiten Krümmungsradius hat, der kleiner als 3 mm, vorzugsweise kleiner als 2 mm, vorzugsweise kleiner als 1 mm, vorzugsweise kleiner als 0,8 mm, am bevorzugtesten kleiner als 0,5 mm ist. Damit der Verriegelungsdraht mit der Bodenfläche uneingeschränkt in Kontakt kommen kann, darf der zweite Krümmungsradius ebenfalls nicht größer als die Hälfte des Durchmessers des Verriegelungsdrahts sein. Wie zuvor beschrieben beträgt der Durchmesser des Verriegelungsdrahts üblicherweise rund 1,7 mm. Insofern stellt ein zweiter Krümmungsradius von unter 0,8 mm einen Kontakt zur Bodenfläche für die meisten Verriegelungsdrähte sicher. Wie ebenfalls zuvor beschrieben, kann der Draht auch einen Durchmesser von 6 mm aufweisen. Folglich ist ein zweiter Krümmungsradius von weniger als 3 mm ebenfalls denkbar.

Vorteilhaft besteht das Halbzeug aus Metall, vorzugsweise Stahl, weiter vorzugsweise Edelstahl. In einer bevorzugten Ausgestaltung ist die Dicke des Halbzeugs konstant. Insbesondere Edelstahl eignet sich besonders für das erfindungsgemäße Herstellungsverfahren, da sich dieses Material gut umformen lässt und sich somit nur geringe Herstellungstoleranzen einstellen. Ferner weist Edelstahl vorteilhafte Eigenschaften bei der Kaltverfestigung auf. Des Weiteren ist es vorteilhaft, dass hierbei das umweltkritische Verchromen zur Bildung einer glatten Oberfläche entfallen kann, indem dieser Fertigungsschritt durch das Durchführen einer Elektropolitur ersetzt wird.

Vorteilhaft ist die Kaltumformung in Schritt c) ein Fertigungsverfahren, das aus der Gruppe ausgewählt wird, die umfasst: Pressen, insbesondere Gesenkbiegepressen, Stanzen, Tiefziehen und/oder Fließpressen.

Vorteilhaft umfasst das Erzeugen in Schritt d1) und/oder e1) das Bereitstellen des Rohlings nach Schritt c) oder ein weiteres Umformen des Rohlings, zweckmäßigerweise Biegen.

Vorteilhaft ist das Fügen in Schritt f1) und/oder das Verbinden in Schritt e2) ein Fertigungsverfahren, das aus der Gruppe ausgewählt wird, die umfasst: Schweißen, insbesondere Laserschweißen; Löten, Kleben.

Die erfindungsgemäße Haltestange zum Tragen einer Kopfstütze eines Fahrzeugsitzes zeichnet sich durch einen rohrförmigen Körper aus, der mittels des zuvor genannten Verfahrens gefertigt ist.

Vorteilhaft ist die Vertiefung als eine Rastkerbe, eine Rutschkerbe oder eine Fangkerbe ausgestaltet. Eine Fangkerbe zeichnet sich durch zwei parallel verlaufende und im Lot zur Mantelfläche der Haltestange stehende Seitenflächen aus. Bei einem Eingreifen des Verriegelungsdrahts mit einer Fangkerbe ist ein Lösen aus dieser Position nur durch manuelles Entfernen des Verriegelungsdrahts aus der Fangkerbe möglich. Meist wird eine derartige Fangkerbe an einer Haltestangen vorgesehen, um im Crashfall ein Separieren zu verhindern. Eine Rutschkerbe zeichnet sich durch zwei schräg im Winkel zueinander verlaufende Seitenflächen aus. Hierbei sind die Seitenfläche derart angewinkelt, sodass die Kopfstütze durch manuelles Anheben oder Niederdrücken in eine andere Position gebracht werden kann, wobei der Verriegelungsdraht aus der Vertiefung entlang den schräg verlaufenden Seitenflächen gedrückt werden kann. Die Rastkerbe zeichnet sich durch eine im Lot zur Mantelfläche stehenden Seitenfläche und eine schräg zur Mantelfläche angeordnete Seitenfläche aus. Die im Lot zur Mantelfläche stehende Seitenfläche wirkt als Verriegelung und kann lediglich durch ein manuelles Anheben des Verriegelungsdrahts aus der Vertiefung gelöst werden. Meist wird diese Seitenfläche an der Oberseite der Vertiefung angebracht, sodass ein Niederdrücken der Kopfstütze in den Fahrzeugsitz verhindert wird. Die angewinkelte Seitenfläche ist meist an der Unterseite der Vertiefung angebracht, sodass ein Anheben der Kopfstütze möglich ist, ohne zusätzlich den Verriegelungsdraht manuell aus der Verriegelung lösen zu müssen. Derartige Rastkerben werden meist in Kombination mit einer Fangkerbe vorgesehen, die ein Separieren der Kopfstütze während einem Fahrzeugunfall zusätzlich verhindern soll.

Die erfindungsgemäße Kopfstütze zeichnet sich durch die zuvor beschriebene Haltestange aus.

Der erfindungsgemäße Fahrzeugsitz zeichnet sich durch die zuvor beschriebene Kopfstütze aus.

Vorteilhaft umfasst der Fahrzeugsitz ein Verriegelungsmittel zur Arretierung der Position der Haltestange relativ zum Fahrzeugsitz. Zweckmäßigerweise ist hierbei das Verriegelungsmittel als Draht ausgestaltet, der im Querschnitt rund ist und einen vorgegebenen Durchmesser hat. Das Verriegelungsmittel kann auch der zuvor beschriebene Verriegelungsdraht sein. Unter Verriegelungsmittel kann auch eine Führungshülse verstanden werden, welche zusätzlich zur Führung der Haltestange dient. Hierbei wird im Kopf der Führungshülse der Verriegelungsdraht gegen die Haltestange vorgespannt.

Weiter bevorzugt ist der erste Krümmungsradius kleiner als fünf Zehntel des Durchmessers des Drahts, vorzugsweise zwischen einem Zehntel und fünf Zehntel des Durchmessers des Drahts. Ferner ist der zweite Krümmungsradius bevorzugt kleiner als ein Drittel des Durchmessers des Drahts. Wie zuvor beschrieben ermöglicht diese relative geometrische Ausgestaltung einen sicheren Halt der Haltestange in dem Fahrzeugsitz.

Das erfindungsgemäße Fahrzeug zeichnet sich durch den zuvor beschriebenen Fahrzeugsitz aus.

Zusammengefasst ermöglich das zuvor beschriebene Herstellungsverfahren durch die Verwendung eines Untergesenks oder Gegenmatrize, die besonders kleinen Radien der Übergangsbereiche und die besondere Tiefe der Vertiefungen zu fertigen. Hierdurch kann sichergestellt werden, dass sich die Haltestangen während eines Unfalls nicht aus der Sitzstruktur winden können. Folglich wird mittels des erfindungsgemäßen Herstellungsverfahrens die Sicherheit für die Fahrzeuginsassen erhöht.

Nachfolgend werden erfindungsgemäße Ausführungsbeispiele und vorteilhafte Ausgestaltungen hiervon schematisch in den beigefügten Zeichnungen näher erläutert. Darin zeigt:
- Fig. 1: ein Fahrzeug;
- Fig. 2: ein Fahrzeugsitz mit einer erfindungsgemäßen Haltestange für ein Fahrzeug gemäß Fig. 1;
- Fig. 3: eine Kopfstütze mit einer erfindungsgemäßen Haltestange für einen Fahrzeugsitz gemäß Fig. 2;
- Fig. 4: eine Draufsicht auf die Führungshülse der Fig. 3;
- Fig. 5: einen erfindungsgemäßen rohrförmigen Körper;
- Fig. 6: eine perspektivische Ansicht des ersten Segments und des zweiten Segments;
- Fig. 7: einen Querschnitt entlang einer Längsrichtung durch den Mittelpunkt eines rohrförmigen Körpers;
- Fig. 8: eine Detailansicht der Fangkerbe aus Fig. 7;
- Fig. 9: eine perspektivische Ansicht einer Rastkerbe in einer vorteilhaften Ausgestaltung;
- Fig. 10: einen Querschnitt im Lot zur Längsrichtung des rohrförmigen Körpers durch die Rastkerbe der Fig. 9;
- Fig. 11: den Ablauf der Verfahrensschritte zur Herstellung des rohrförmigen Körpers;
- Fig. 12: zeigt den Ablauf der Verfahrensschritte zur Herstellung des rohrförmigen Körpers in einer alternativen Ausgestaltung;
- Fig. 13: eine Produktionsstraße zur Herstellung eines rohrförmigen Körpers;
- Fig. 14: eine Detailansicht eines Prototyp vergleichbar zu Fig. 8 und
- Fig. 15: einen Querschnitt im Lot zur Längsrichtung des rohrförmigen Körpers.

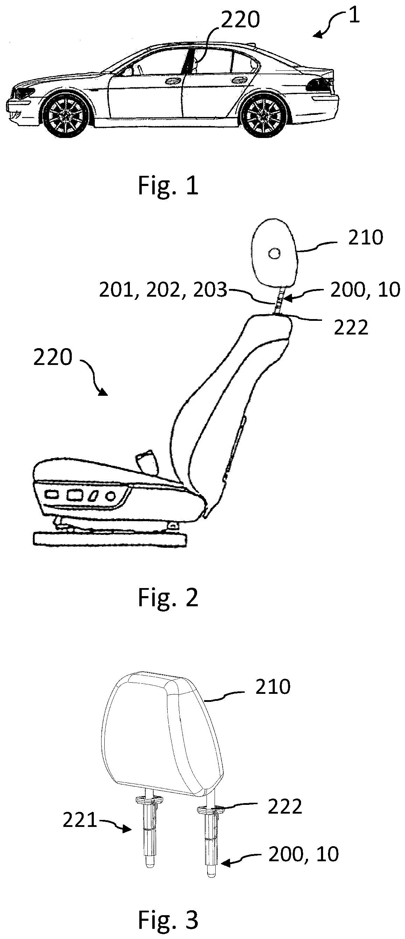

Fig. 1 zeigt ein Fahrzeug 1 mit einem Fahrzeugsitz 220. Das Fahrzeug 1 dient zur Personenbeförderung und ist in der gezeigten Figur beispielhaft als ein Kraftfahrzeug dargestellt.

Der in Fig. 2 dargestellte Fahrzeugsitz 220 umfasst eine Kopfstütze 210 mit einer Haltestange 200, die in einer Führungshülse 221 verfahrbar zum Fahrzeugsitz 220 angeordnet ist.

Die Haltestange 200 weist mehrere Rastkerben 201 zur Arretierung der Position der Kopfstütze 210 relativ zu dem Fahrzeugsitz 220 und eine Fangkerbe 203 zur Sicherung der Kopfstütze 210 gegen ein Separieren von dem Fahrzeugsitz 220 auf. In einer weiteren Variante kann die Haltestange auch mehrere Rutschkerben 202 und eine Fangkerbe 203 aufweisen.

Zur Arretierung der Position der Kopfstütze 210 weist die Führungshülse 221 einen Verriegelungsdraht 222 auf. Der Verriegelungsdraht 222 ist im oberen Bereich der Führungshülse 221 angeordnet und kann mittels eines manuellen Betätigungsknopfs 223 verschoben werden, sodass dieser eine Öffnung 224 frei gibt. Durch die Öffnung 224 wird die Haltestange 200 geführt. In einem verriegelten Zustand greift der Verriegelungsdraht 222 in die Rastkerbe 201, Rutschkerbe 202 oder Fangkerbe 203 der Haltestange 200 ein. Der Verriegelungsdraht 222 kann mittels einer Feder gegen die Haltestange 200 vorgespannt werden, sodass dieser automatisch in die Rastkerbe 201, die Rutschkerbe 202 oder die Fangkerbe 203 einrasten kann. Alternativ ist der Verriegelungsdraht 222 derart im Kopf der Führungshülse 221 befestigt, sodass dieser gegen die Haltestange 200 vorgespannt wird.

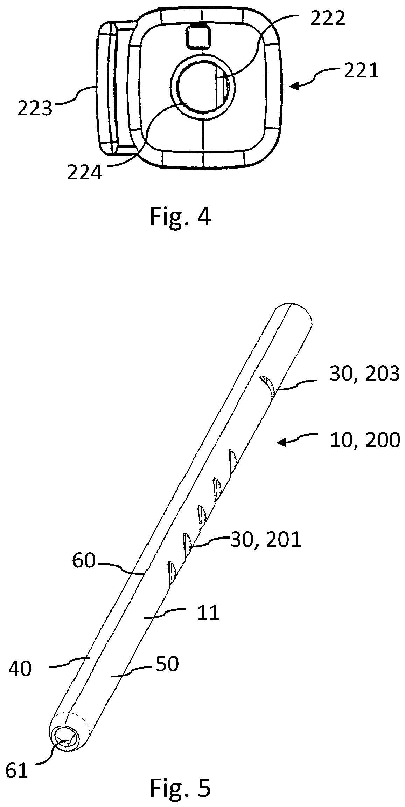

Fig. 5 zeigt einen rohrförmigen Körper 10 der auch als die zuvor beschrieben Haltestange 200 verwendet werden kann. Der dargestellte rohrförmige Körper 10 wird aus einem ersten schalenförmigen Segment 40 und einen zweiten schalenförmigen Segment 50 gebildet. Die schalenförmige Segmente 40,50 sind entlang zweier gegenüberliegenden Nahtstellen 60, 61 miteinander verbunden. Des Weiteren weist das erste schalenförmige Segment 40 mehrere Vertiefungen 30 auf, wobei eine Vertiefung 30 die Fangkerbe 203 und die weiteren Vertiefungen 30 die Rastkerben 201 in der dargestellten Ausführungsform bilden.

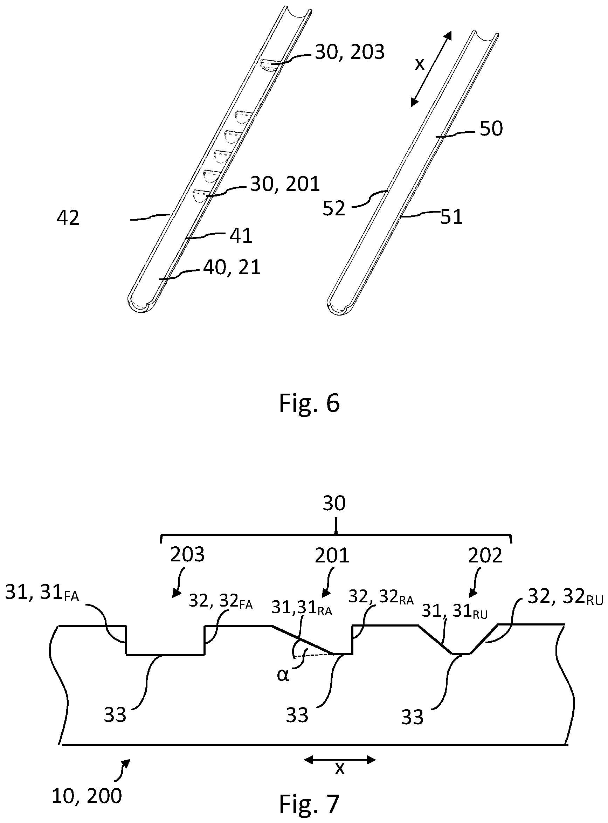

In Fig. 6 sind die zwei erzeugten schalenförmige Segmente 40, 50 gezeigt, bevor diese zu dem zuvor beschriebenen rohrförmigen Körper 10 gefügt werden. Das erste Segment 40 weist die Vertiefungen 30 auf, und das zweite Segment 50 weist in der dargestellten Ausführungsform keine weiteren Vertiefungen 30 auf. Ferner hat das erste Segment 40 zwei Ränder 41, 42 und das zweite Segment 50 zwei Ränder 51, 52, welche sich jeweils entlang der Längsrichtung x erstrecken.

In einer alternativen Ausgestaltung des Herstellungsverfahrens kann das zuvor beschriebe erste schalenförmige Segment 40 auch einen Rohling 21 darstellen, in welchen eine Vertiefung 30 eingebracht wurde.

Fig. 7 zeigt jeweils eine seitliche Detailansicht der Vertiefungen 30 in der Ausgestaltung als Rastkerbe 201, Rutschkerbe 202 und Fangkerbe 203.

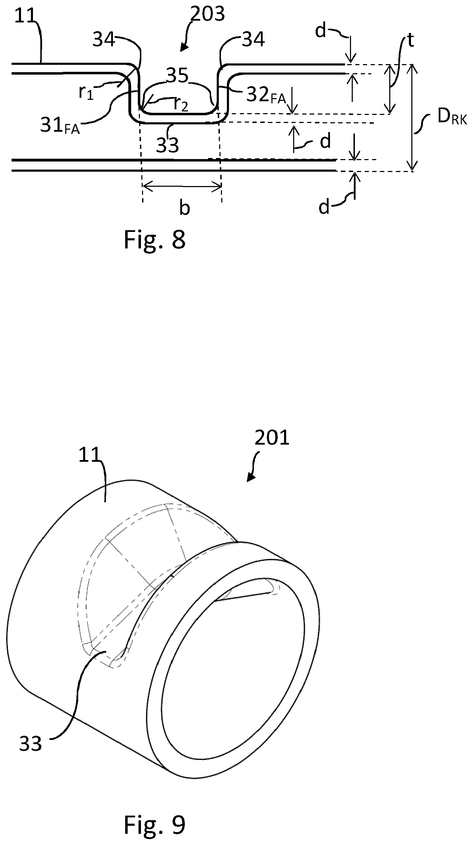

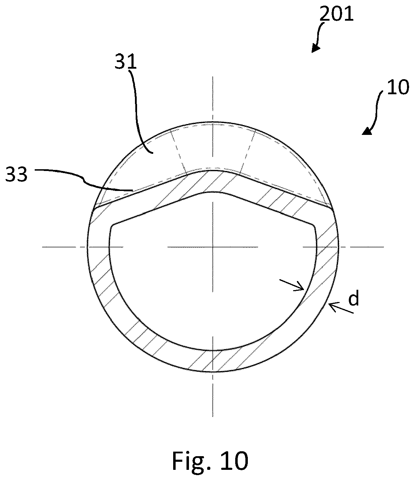

Die Vertiefungen 30 weisen jeweils eine erste Seitenfläche 31, eine zweite Seitenfläche 32 und eine Bodenfläche 33 auf. In einer möglichen Ausgestaltung ist die Bodenfläche 33 eine ebene Fläche. Mittels des erfindungsgemäßen Herstellungsverfahrens sind allerdings auch runde oder dachförmige Ausgestaltungen der Bodenfläche 33 möglich. Eine dachförmige Ausgestaltung ist beispielhaft nachfolgend anhand von Fig. 9 und Fig. 10 detailliert beschrieben.

Die Vertiefung 30 in der Ausgestaltung einer Rastkerbe 201 weist eine erste Seitenfläche 31_{RA} und eine zweite Seitenfläche 32_{RA} auf. Die erste Seitenfläche 31_{RA} verläuft schräg, sodass die erste Seitenfläche 31_{RA} in einem Winkel α von beispielsweise 45° zur Bodenfläche 33 abgewinkelt ist. Die zweite Seitenfläche 32_{RA} der Rastkerbe 201 ist senkrecht zur Längsrichtung x angeordnet.

Die Vertiefung 30 in der Ausgestaltung einer Rutschkerbe 202 weist eine erste Seitenfläche 31_{RU} und eine zweite Seitenfläche 32_{RU} auf. Die Seitenflächen 31_{RU}, 32_{RU} sind zueinander angewinkelt und bilden dadurch eine Kerbe. Vorteilhaft weist dabei jede Seitenfläche 31_{RU}, 32_{RU} zweckmäßigerweise einen Winkel α von 45° zur Bodenfläche 33 auf.

Die Vertiefung 30 in der Ausgestaltung einer Fangkerbe 203 weist eine erste Seitenfläche 31_{FA} und eine zweite Seitenfläche 32_{FA} auf. Die Seitenflächen 31_{FA}, 32_{FA} sind senkrecht zur Längsrichtung x angeordnet.

Fig. 8 zeigt einen Querschnitt im Bereich einer Fangkerbe 203 entlang der Längsrichtung x durch den Mittelpunkt des rohrförmigen Körpers 10. Die Fangkerbe 203 weist eine Breite b von 2,5 +0,4 mm und eine Tiefe von 3,2 mm +0,2 mm auf. Die Rastkerbe 201 und die Rutschkerbe 202 sind vergleichbar dimensioniert.

Im Übergang von der Mantelfläche 11 zur ersten und/oder zweiten Seitenfläche 31_{FA}, 32_{FA} ist der erste Übergangsbereich 34 angeordnet. Der erste Übergangsbereich 34 weist einen ersten Radius r₁ von maximal 0,3 mm auf. Im Übergang von der ersten und/oder zweiten Seitenfläche 31_{FA}, 32_{FA} zur Bodenfläche 33 ist der zweite Übergangsbereich 35 angeordnet. Der zweite Übergangsbereich 35 weist einen ersten Radius r₂ von 0,5 +/- 0,3 mm auf. Der dargestellte rohrförmige Körper 10 weist durchgehend eine im Wesentlichen konstante Dicke d von 1,5 mm.

Die zuvor beschriebene zweite Seitenfläche 32_{RA} der Rastkerbe 201 weist einen vergleichbar dimensionierten ersten Übergangsbereich und zweiten Übergangsbereich auf.

Eine bevorzugte Ausgestaltung der Rastkerbe 201 ist in Fig. 9 und Fig. 10 gezeigt. Die gezeigte Rastkerbe 201 zeichnet sich durch eine dachförmige Bodenfläche 33 bei einer gleichbleibenden Dicke d aus. Vorteilhaft ermöglicht die dachförmige Ausgestaltung eine Erstreckung der Rastkerbe 201 um einen größeren Teilbereich des Umfangs des rohrförmigen Körpers 10.

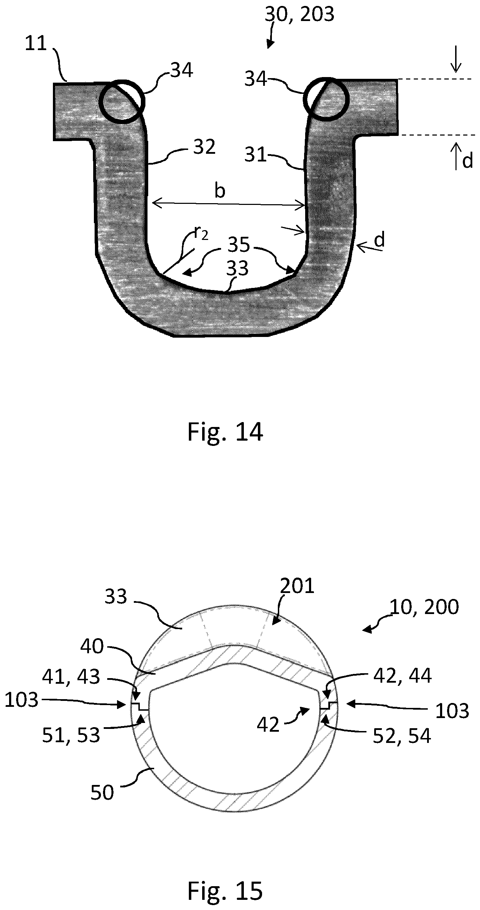

Fig. 14 zeigt beispielsweise ein Schliffbild der zuvor beschriebenen Fangkerbe 203, welche schematisch in Fig. 8 gezeigt ist. Der erste gekrümmte Übergangsbereich 34 beginnt abrupt ausgehend von der Mantelfläche 11 und geht fließend in die erste Seitenfläche 31 und zweite Seitenfläche 32 über. Zur zusätzlichen Veranschaulichung ist in dem Übergangsbereich ein Kreis eingezeichnet, der einen Radius von 0,4 mm aufweist. Ferner ist hervorzuheben, dass die Wandstärke der Vertiefung 30 oder Fangkerbe 203 eine homogene Dicke d aufweist.

Fig. 15 zeigt anhand eines Querschnitts durch den rohrförmigen Körper 10 zwei Segmente 40, 50, die jeweils im Rand 41, 42, 51, 52 eine Kanteneinprägung 43, 44, 53, 54 aufweisen. Die gezeigte Kanteneinprägung 43, 44, 53, 54 ist stufenförmig ausgestaltet. Die gezeigte Kanteinprägung 43, 44, 53, 54 ist geprägt durch einen Vorsprung und einen Rücksprung. Hier weist das erste Segment 40 einen radial innenliegenden Vorsprung und einen radial außenliegenden Rücksprung auf. Das zweite Segment 50 weist einen zu dem radial innenliegenden Vorsprung des ersten Segments 40 einen korrespondierenden radial innenliegenden Rücksprung auf, in welchen der Vorsprung des ersten Segments 40 formschlüssig eingreift. Zusätzlich weist das zweite Segment 50 einen radial außenliegenden Vorsprung auf, der in den radial außenliegenden Rücksprung des ersten Segments 40 eingreift.

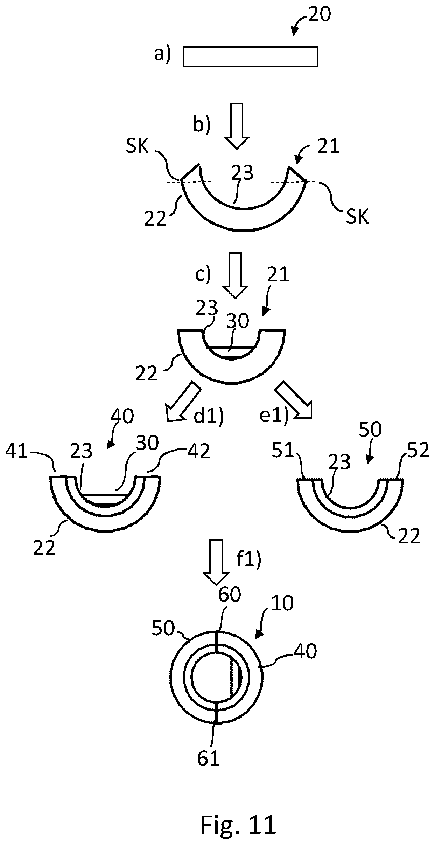

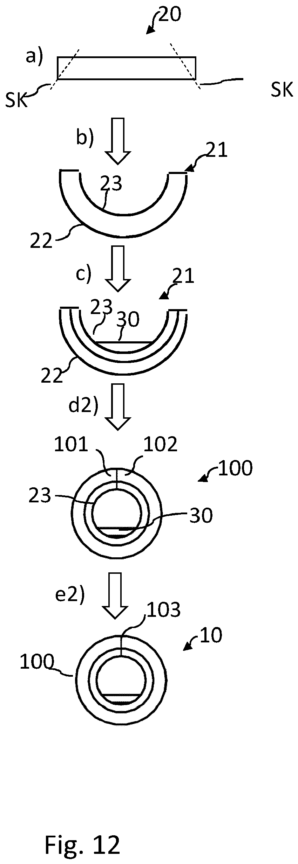

Fig. 11 und Fig.12 zeigen die einzelnen Verfahrensschritte zur Herstellung des rohrförmigen Körpers 10.

Zuerst wird in Schritt a) ein plattenförmiges Halbzeug 20 bereitgestellt. Nachfolgend wird gemäß Schritt b) das Halbzeug 20 zu einem eine konvexe Form aufweisenden Rohling 21, der eine Außenfläche 22 und eine der Außenfläche 22 abgewandte Innenfläche 23 hat, umgeformt. Zur Begradigung der Ränder 41, 42 wird entlang der Schnittkante SK ein Teilbereich des Rohlings 21 mittels eines Lasers abgeschnitten. Der Verfahrensschritt zur Begradigung der Ränder 41,42 kann auch nach einem der nachfolgenden Verfahrensschritte durchgeführt werden. In Schritt c) wird wenigstens eine Vertiefung 30 in die Außenfläche 22 des Rohlings 21 mittels einer Kaltumformung eingebracht. Dieser Schritt kann zeitgleich mit dem zuvor beschriebenen Verfahrensschritt erfolgen.

Insofern der Rohling 21 bereits die endgültige schalenförmige Form aufweist, ist ebenfalls mit Schritt b) oder c) ein schalenförmiges Segment 40, 50 gemäß Schritt d1) oder e1) erzeugt. Wenn der Rohling 21 noch nachgeformt werden muss, wird ein schalenförmiges Segment 40, 50 gemäß Schritt d1) oder e1) erzeugt, indem der Rohling 21 nochmals umgeformt oder beschnitten wird. Insbesondere kann dabei ebenfalls der Rand 41,42, 51,52 mittels Laser beschnitten werden, sodass eine geeignete Stoßkante gebildet wird.

Das erzeugte erste schalenförmige Segment 40 nach Schritt d1) erstreckt sich in Längsrichtung x und weist in Längsrichtung x zwei Ränder 41, 42 und eine Vertiefung 30 auf. Das erzeugte zweite schalenförmige Segment 50 nach Schritt e1) erstreckt sich ebenfalls in Längsrichtung x und weist in Längsrichtung x zwei Ränder 51, 52 auf.

Abschließend wird in Schritt f1) das erste Segment 40 und das zweite Segments 50 zur Bildung des rohrförmigen Körpers 10 gefügt, indem die Ränder 41, 52; 42, 51 des ersten Segments 40 und des zweiten Segments 50 entlang von wenigstens zwei Nahtstellen 60, 61 miteinander verbunden, insbesondere verschweißt, werden.

Das in Fig. 12 gezeigte Herstellungsverfahren unterscheidet sich zu dem zuvor beschriebenen Verfahren dadurch, dass bereits die Ränder des Halbzeugs entlang der Schnittkannte SK beschnitten werden. Hierbei verläuft die Schnittkannte SK entlang der Längsrichtung x und ist derart angewinkelt, sodass beim Umformen oder Biegen zu einem rohrförmigen Körper die Ränder 101, 102 parallel zueinander liegen. Jedoch ist der anhand dieses Herstellungsverfahrens beschriebene Beschnitt auch mit dem zuvor beschriebenen Herstellungsverfahren möglich und umgekehrt.

Des Weiteren wird zusätzlich nach Schritt c) der Rohling 21 nochmals gebogen, um einen rohrförmigen Körper 21 zu bilden. Zuletzt werden die Ränder 101, 102 entlang einer Nahtstelle 103 verbunden.

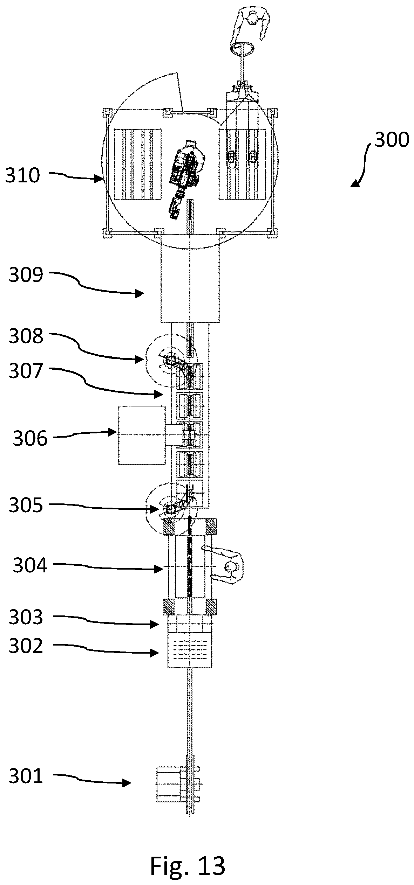

Fig. 13 zeigt eine Fertigungsstraße 300 zur Herstellung des rohrförmigen Körpers 10. Die Fertigungsstraße 300 weist eine Abwickelhaspel 301 zum Bereitstellen eines plattenförmigen Halbzeugs 20 auf.

Von der Abwickelhaspel 301 wird das Halbzeug 20 an eine Richtmaschine 302 übergeben. Die Richtmaschine 302 weist mehrere Walzen auf und richtet das Halbzeug 20.

Mittels eines Walzenvorschubs 303 wird das Halbzeug 20 in die Presse 304 mit einem mit Präge-Stanz-Werkzeug, das ein Obergesenk und ein Untergesenk aufweist, kontrolliert gefördert.

In der Presse 304 wird das Halbzeug 20 zu einem Rohling 21 umgeformt und gegebenenfalls eine Vertiefung 30 in den Rohling 21 eingebracht oder nur in die benötigte Form gebracht. Diese Schritte können gleichzeitig erfolgen.

Aus der Presse 304 wird das Segment 40, 50, 100 mittels eines ersten Übergaberoboters 305 herausgehoben und in eine Halteeinheit gelegt. Dabei wird beispielsweise das erste Segment 40 in eine erste Halteeinheit und das zweite Segment 50 in eine zweite Halteeinheit, welche parallel zu der ersten Halteeinheit entlang der Förderrichtung positioniert ist, gelegt. Die erste und zweite Halteeinheit werden anschließend zusammengeklappt, sodass die Ränder 41, 42, 51, 52 des ersten Segments 40 und des zweiten Segments 50 aneinander Liegen und die Nahtstelle 61, 62 bilden. Die derart zusammengeklappte Halteeinheit wird anschließend an die Laser-Schweiß-Anlage 306 gefördert.

Die Laser-Schweiß-Anlage 306 verbindet mittels eines Laserschweißverfahrens die aneinander liegenden Ränder 41, 42, 51 ,52 und erzeugt somit in einem letzten Schritt den rohrförmigen Körper 10, der als Haltestange 200 verwendet werden kann.

Abschließend kann der erzeugte rohrförmige Körper 10 und insbesondere die Nahtstelle in einer Rundschleifmaschine 309 nachgeschliffen werden, um eine runde Haltestange ohne Erhöhungen sicherzustellen. In einem nachfolgenden externen Schritt kann zusätzlich die Mantelfläche 11 mittels eines Elektropolierverfahrens anforderungsgemäß gefertigt werden.

Die fertig hergestellten rohrförmigen Körper 10 werden zuletzt in dem Palettierbereich 310 von einer Palettiermaschine transportfähig verpackt.

Die beschriebene Fertigungsstraße 300 zeichnet sich durch einen vollautomatisierten Herstellungsprozess aus.

**Bezugszeichenliste**

| | | | |
|---|---|---|---|
| 1 | Fahrzeug | 43 | Kanteneinprägung |
| | | 44 | Kanteneinprägung |
| 10 | rohrförmiger Körper | | |
| 11 | Mantelfläche | 50 | zweites schalenförmiges Seg-ment |
| 20 | Halbzeug | | |
| 21 | Rohling | 51 | Rand |
| 22 | Außenfläche | 52 | Rand |
| 23 | Innenfläche | 53 | Kanteneinprägung |
| 60 | Nahtstelle | 54 | Kanteneinprägung |
| 61 | Nahtstelle | | |
| d | Dicke | 100 101 | rohrförmiges Segment Rand |
| 30 | Vertiefung | 102 | Rand |
| 31 | erste Seitenfläche | 103 | Nahtstelle |
| 32 | zweite Seitenfläche | | |
| 33 | Bodenfläche | 200 | Haltestange |
| 34 | erster gekrümmte Übergangs- | 201 | Rastkerbe |
| | bereich | 202 | Rutschkerbe |
| 35 | zweiter gekrümmter Über- | 203 | Fangkerbe |
| | gangsbereich | 210 | Kopfstütze |
| α | Winkel | 220 | Fahrzeugsitz |
| r₁ | erster Krümmungsradius | 221 | Führungshülse |
| r₂ | zweiter Krümmungsradius | 222 | Verriegelungsmittel |
| t | Tiefe | D_{RK} | Durchmesser |
| b | Breite | x | Längsrichtung |
| 40 | erstes schalenförmiges Segment | | |
| | | 300 | Fertigungsstraße |
| 41 | Rand | 301 | Abwickelhaspel |
| 42 | Rand | 302 | Richtmaschine |
| 303 | Walzenvorschub | 308 | zweiter Übergaberoboter |
| 304 | Presse | 309 | Rundschleifmaschine |
| 305 | erster Übergaberoboter | 310 | Palettierbereich |
| 306 | Laser-Schweiß-Anlage | | |
| 307 | Transfersystem | | |

## Patentansprüche

1. Verfahren zum Herstellen eines rohrförmigen Körpers (10), der als Haltestange (200) zum Tragen einer Kopfstütze (210) eines Fahrzeugsitzes (220) ausgestaltet ist, wobei der rohrförmige Körper (10) eine mit wenigstens einer Vertiefung (30) versehene Mantelfläche (11) aufweist, **gekennzeichnet durch** folgende Verfahrensschritte:
a) Bereitstellen von wenigstens einem plattenförmigen Halbzeug (20), das eine vorgegebene Dicke (d) hat;
b) Umformen des Halbzeugs (20) zu einem eine konvexe Form aufweisenden Rohling (21), der eine Außenfläche (22) und eine der Außenfläche (22) abgewandte Innenfläche (23) hat;
c) Einbringen von wenigstens einer Vertiefung (30), die eine vorgegebene Breite (b) und Tiefe (t) hat, in die Außenfläche (22) des Rohlings (21) mittels einer Kaltumformung während oder nach Schritt b);
d1) Erzeugen von wenigstens einem ersten schalenförmigen Segment (40), das sich in einer Längsrichtung (x) erstreckt und in der Längsrichtung (x) zwei Ränder (41, 42) hat, aus dem Rohling (21) nach Schritt c);
e1) Erzeugen von wenigstens einem zweiten schalenförmigen Segment (50), das sich in einer Längsrichtung (x) erstreckt und in der Längsrichtung (x) zwei Ränder (51, 52) hat, aus dem Rohling (21) nach Schritt b) oder c);
f1) Fügen des ersten Segments (40) und des zweiten Segments (50) nach Schritt e1) zur Bildung des rohrförmigen Körpers (10), indem die Ränder (41, 52; 42, 51) des ersten Segments (40) und des zweiten Segments (50) entlang von wenigstens zwei Nahtstellen (60, 61) miteinander verbunden werden.

2. Verfahren zum Herstellen eines rohrförmigen Körpers (10), der als Haltestange (200) zum Tragen einer Kopfstütze (210) eines Fahrzeugsitzes (220) ausgestaltet ist, wobei der rohrförmige Körper (10) eine mit wenigstens einer Vertiefung (30) versehene Mantelfläche (11) hat, **gekennzeichnet durch** folgende Verfahrensschritte:
a) Bereitstellen von wenigstens einem plattenförmigen Halbzeug (20), das eine vorgegebene Dicke (d) hat;
b) Umformen des Halbzeugs (20) zu einem eine konvexe Form aufweisenden Rohling (21), der eine Außenfläche (22) und eine der Außenfläche (22) abgewandte Innenfläche (23) hat;
c) Einbringen von wenigstens einer Vertiefung (30), die eine vorgegebene Breite (b) und Tiefe (t) hat, in die Außenfläche (22) des Rohlings (21) mittels einer Kaltumformung während oder nach Schritt b);
d2) Biegen des Rohlings (21) zu einem rohrförmigen Segment (100), das sich in einer Längsrichtung (x) erstreckt und in der Längsrichtung (x) zwei einander gegenüberliegende Ränder (101, 102) hat, nach Schritt c);
e2) Verbinden der Ränder (101, 102) entlang einer Nahtstelle (103) nach Schritt d2) zur Bildung des rohrförmigen Körpers (10).

3. Verfahren nach Anspruch 1 oder 2, **dadurch gekennzeichnet, dass** das Halbzeug (20) oder der Rohling (21) oder das Segment (40, 50, 100) entlang der Längsrichtung (x) vor dem Verbinden der Ränder (41, 52; 42, 51; 101,102) beschnitten werden.

4. Verfahren nach einem der Ansprüche 1 bis 3, **dadurch gekennzeichnet, dass** zumindest einer der Ränder (41, 42) des ersten Segments (40) mit einer ersten Kanteneinprägung (43, 44) und zumindest einer der Ränder (51, 52) des zweiten Segments (50) mit einer zweiten Kanteneinprägung (53, 54) versehen werden,
wobei die erste Kanteneinprägung (43, 44) und die zweite Kanteneinprägung (53, 54) ausgestaltet sind ineinander einzugreifen.

5. Verfahren nach einem der Ansprüche 1 bis 4, **dadurch gekennzeichnet, dass** die Vertiefung (30) eine erste Seitenfläche (31), eine zweite Seitenfläche (32), die der ersten Seitenfläche (31) gegenüber liegt, und eine Bodenfläche (33) aufweist.

6. Verfahren nach Anspruch 5, **gekennzeichnet durch** einen ersten gekrümmten Übergangsbereich (34) zwischen der ersten Seitenfläche (31) und/oder der zweiten Seitenfläche (32) und der Mantelfläche (11), der einen vorgegebenen ersten Krümmungsradius (r₁) hat;
wobei der erste Krümmungsradius (r₁) kleiner als 3 mm, vorzugsweise kleiner als 2 mm, vorzugsweise kleiner als 1 mm, vorzugsweise kleiner als 0,75 mm, vorzugsweise kleiner als 0,5 mm, vorzugsweise kleiner als 0,4 mm, am bevorzugtesten kleiner als 0,3 mm ist.

7. Verfahren nach einem der Ansprüche 5 oder 6, **gekennzeichnet durch** einen zweiten gekrümmten Übergangsbereich (35) zwischen der ersten Seitenfläche (31) und/oder der zweiten Seitenfläche (32) und der Bodenfläche (33), der einen vorgegebenen zweiten Krümmungsradius (r₂) hat;
wobei der zweite Krümmungsradius (r₂) kleiner als 3 mm, vorzugsweise kleiner als 2 mm, vorzugsweise kleiner als 1 mm, vorzugsweise kleiner als 0,8 mm, am bevorzugtesten kleiner als 0,5 mm ist.

8. Verfahren nach einem der Ansprüche 1 bis 7, **dadurch gekennzeichnet, dass** das Halbzeug (20) aus Metall, vorzugsweise Stahl, weiter vorzugsweise Edelstahl, besteht und
wobei vorzugsweise die Dicke (d) des Halbzeugs (20) konstant ist.

9. Verfahren nach einem der Ansprüche 1 bis 8, **dadurch gekennzeichnet, dass** das Erzeugen in Schritt d1) und/oder e1) das Bereitstellen des Rohlings (21) nach Schritt c) oder ein weiteres Umformen des Rohlings (21), vorzugsweise Biegen, umfasst.

10. Haltestange (200) zum Tragen einer Kopfstütze (210) eines Fahrzeugsitzes (220), **gekennzeichnet durch** einen rohrförmigen Körper (10), der mittels des Verfahrens nach einem der Ansprüche 1 bis 9 gefertigt ist,
wobei vorzugweise die Vertiefung (30) als eine Rastkerbe (201) und/oder eine Rutschkerbe (202) und/oder eine Fangkerbe (203) ausgestaltet ist.

11. Kopfstütze (210), **gekennzeichnet durch** eine Haltestange (200) nach Anspruch 10.

12. Fahrzeugsitz (220), **gekennzeichnet durch** eine Kopfstütze (210) nach Anspruch 11.

13. Fahrzeugsitz (220) nach Anspruch 12, **gekennzeichnet durch** ein Verriegelungsmittel (222) zur Arretierung der Position der Haltestange (200) relativ zu dem Fahrzeugsitz (220);
wobei vorzugsweise das Verriegelungsmittel (222) als Draht ausgestaltet ist, der im Querschnitt rund ist und einen vorgegebenen Durchmesser (D) hat.

14. Fahrzeugsitz (220) nach Anspruch 13 und einem der Ansprüche 4 bis 6, **dadurch gekennzeichnet, dass** der erste Krümmungsradius (r₁) kleiner als fünf Zehntel des Durchmessers (D) des Drahts, vorzugsweise zwischen einem Zehntel und fünf Zehntel des Durchmessers (D) des Drahts ist und/oder
dass der zweite Krümmungsradius (r₂) kleiner als ein Drittel des Durchmessers (D) des Drahts ist.

15. Fahrzeug (1), **gekennzeichnet durch** einen Fahrzeugsitz (220) nach einem der Ansprüche 12 bis 14.
